(19) Europäisches Patentamt
European Patent Office
Office européen des brevets

(11) EP 0 982 356 A2

(12) EUROPEAN PATENT APPLICATION

(43) Date of publication:
**01.03.2000 Bulletin 2000/09**

(51) Int Cl.[7]: **C08K 5/353**, C08G 59/14, C09D 175/04

(21) Application number: **99810759.3**

(22) Date of filing: **24.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.08.1998 US 141893**
**24.06.1999 US 338968**

(71) Applicant: **Clariant Finance (BVI) Limited**
**Road Town, Tortola (VG)**

(72) Inventors:
- **Simonin, Jacques**
**68790 Morschwiller-le-Bas (FR)**
- **Stoll, Klaus**
**79589 Binzen (DE)**
- **Webster, Joseph Reni**
**Charlotte, NC 28277 (US)**

(74) Representative: **D'haemer, Jan Constant et al**
**Clariant International Ltd.,**
**Rothausstrasse 61**
**4132 Muttenz 1 (CH)**

(54) **Improved stabilized coatings**

(57) Disclosed are curable, solvent or solventless, liquid or solid (powder) film forming polymer compositions, comprising a curable polymer, at least one UV stabilizer and a polymeric hindered amine stabilizer which is the reaction product of

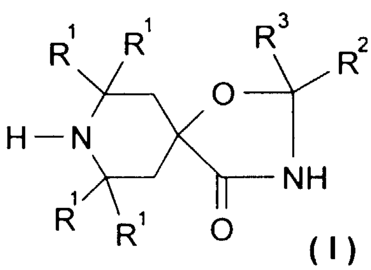

( I )

or its hydrochloride

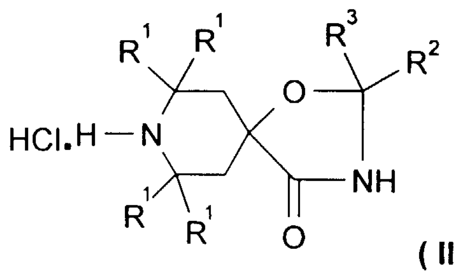

( II )

with epichlorohydrin

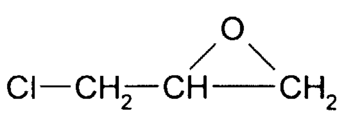

and having a molecular weight from 500 to 50,000; with substituents as defined in claim 1. The coatings are useful on wood, plastic or metal, for example in mono-coats and electro-coating (e-coating) systems, stoving lacquers, as for durable automobile finishes, 1K or 2K, low solids, medium solids, and high solids and particularly low level VOC coatings.

EP 0 982 356 A2

## Description

### FIELD OF THE INVENTION

The invention is directed to improved film forming polymer compositions to be used as curable, liquid or powder coatings.

### BACKGROUND OF THE INVENTION

The use of UV light stabilizers is essential in coating polymers since all known liquid or solid, curable polymeric coatings are readily subject to adverse effects from atmospheric oxygen, moisture and UV light. Several crucial failure mechanisms are manifested in coatings, such as cracking, loss of initial gloss levels, discoloration, loss in physical properties, delamination and formation of bubbles, after exposure to the elements confronted in durable applications. In addition, additives used to combat degradation often affect the extent of curing, or in the converse, curing systems are seen to often affect the service life and efficiency of the additives. Improved aging properties over the currently available coating systems are of continuing industrial interest.

U.S. Pat. No 5,198,498 discloses resin-grafted UV-absorbers for coating compositions. U.S. Pat. Nos. 4,426,471 and 5,112,890 disclose stabilizer components for acid-catalyzed thermoset resins. U.S. Pat. No. 5,037,680 discloses stabilized exterior automotive components with pigmented substrate and clear coatings. U.S. Pat. No. 4,804,717 discloses polymeric hindered amine light stabilizers for polyolefins. U.S. 4,344,876 and U.S. 4,426,471 disclose stabilizer components in heat crosslinkable acrylic polyester or alkyd resins.

The known light stabilizers used to retard the degradative effects on polymers from environmental exposure, are found among the generic classes of hydroxyphenyltriazines, oxalanilides, hydroxybenzotriazoles, hindered amine light stabilizers (HALS) and/or hydroxybenzophenones. Commercially recommended HALS utilized for liquid coating systems are typically liquids at room temperature, while solid HALS are not so often recommended for such use.

Experience with film forming polymers used as coatings has shown that stabilizing effects vary significantly in comparisons between solid and liquid HALS. A liquid coating system utilizing HALS having a molecular weight average about 3000 and above is desirable from the standpoint of permanence, but stabilizing functionality may be lower compared with a relatively lower molecular weight HALS or oligomeric hindered amine having a molecular weight of 1000 to 2000. This is due to what is referred to as "seeding out". In solvent-borne liquid polymeric coatings or in the liquid polymer coatings with low percentage of volatile organic components ("low VOC" coatings), or high solids (HS) coatings, this "seeding out" can result in a phase separation between the polymer and stabilizer, thereby lowering the effective functionality of the stabilizer. A balance in the polarity and molecular weight for HALS in coating systems would be of industrial importance in order to achieve high permanence and functionality if "seeding out" could be avoided.

In attempting to utilize a solid, low volatility oligomeric or polymeric HALS having a molecular weight of above about 2500, in a liquid coating formulation, seeding out of the additive and loss of solution dispersion was observed with many of the commercially recommended HALS. Polymeric HALS having average molecular weight of above 2500 often tend to seed-out of solution in many industrial coating formulations which qualify under VOC and HALS regulations.

From a practical viewpoint, the limited solubility of stabilizers in the environmentally accepted organic solvents employed in coatings affects the UV performance of the resulting coated articles. There is a limited selection of commercially feasible and environmentally acceptable organic solvents. In solventless, e.g. powder coatings, the degree of solubility of the additive in the polymer is critical. It is an objective to find light stabilizers that are highly soluble and compatible with commercially approved solvents, and a further objective is to provide outstanding long term stabilization from degradative effects in the environment. Furthermore, it would be additionally useful to find light stabilizers having a relatively high degree of permanence in coatings.

### SUMMARY OF THE INVENTION

The invention is directed to a curable liquid film forming polymer, or powder coating polymer composition, comprising a curable polymer, at least one UV stabilizer and an oligomeric or polymeric hindered amine stabilizer which is the reaction product obtained by the reaction and subsequent oligomerization of

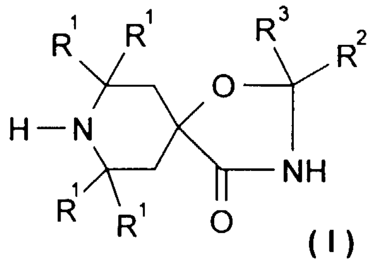

(I)

or its hydrochloride

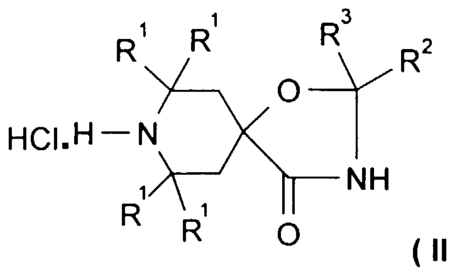

(II)

with epichlorohydrin

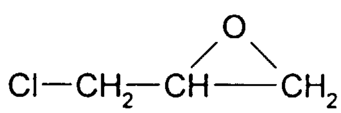

in an organic solvent in the presence of a base, and having a molecular weight from 500 to 50,000, referred to hereinafter as the oligomeric HALS (HALS III);
wherein

| | |
|---|---|
| $R_1$ | is $C_5$-$C_7$-cydoalkyl, or a $C_1$-$C_{12}$-alkyl group, |
| $R^2$ and $R^3$ | independently of one another are a hydrogen atom or a $C_1$-$C_{18}$-alkyl, a $C_6$-$C_{18}$-aryl and $C_1$-$C_{18}$-alkyl substituted $C_6$-$C_{18}$-aryl group, or, together with the carbon atom connecting them, a 5- to 13-membered cycle. |

## DESCRIPTION OF THE PREFERRED EMBODIMENT

The preferred oligomer has a molecular weight of from 500 to 10,000 in which:

| | |
|---|---|
| $R^1$ | is a $C_6$-cycloalkyl, or a $C_1$-$C_4$-alkyl group; |
| $R^2$ and $R^3$ | independently of one another are a hydrogen atom or a $C_1$-$C_8$-alkyl group, or, together with the carbon atom connecting them, are a 6- to 12-membered ring. |

Particularly preferred polymers of (I) or (II) reacted with epichlorohydrin are those having molecular weight of 500 to 5000. The most preferred polymer is available as polymer formed from the reaction of 2,2,4,4-tetramethyl-21-oxo-7-oxa-3,20-diazadispiro-[5.1.11.2] heneicosane or its hydrochloride with epichlorohydrin followed by heat treatment under the preferred conditions mentioned below.

The preparation of the polymer is carried out by reacting compounds of the formula (I) or formula (II) with epichlorohydrin. To prepare the stabilizer polymer it is possible to employ processes already known per se, as are described, for example, in C. *Ferri, Reaktionen der organischen Synthese, 1978, page 504 or Houben-Weyl, Vol. VII*

*3, page 456 or Vol. XI/1, page 311.* The reaction can be carried out with or without solvents; suitable solvents are preferably high-boiling, aprotic solvents, such as toluene, xylene, mesitylene or decalin, for example. The reaction can be implemented with or without catalyst (especially by thermal means), with suitable catalysts being bases, preferably metal salts, especially alkali metal hydroxides, such as NaOH or KOH, for example. A preferred preparation process is the reaction of (I) or (II) directly in bulk, without using a solvent and without catalyst. In this case (I) or (II) are polymerized in the temperature range from 100°C to 300°C, preferably from 120°C to 250°C and, in particular, from 160°C to 220°C, and most preferably from 180° C to 200°C. Heating is preferably done in the absence of oxygen. A solventless polymerization in vacuo is particularly suitable. The product in this case, after working up, is a solid, amorphous resin. The molecular weight of the resulting oligomer or polymer can be controlled as a function of the temperature, the molar ratio in which the starting materials are employed, and/or the reaction time.

The polymeric coatings are liquid lacquers or solid particulate polymers such as powders, which form a film in the presence or absence of heat and undergo curing as a result of the functional curing system present. As such, the stabilizers which are present undergo very little shearing action and readily become intimately dispersed, preferably on a molecular level upon mixture with the film forming polymer. The liquid curable coating polymers include pigmented or unpigmented lacquers. The curable polymers can be cured by acid or base catalysts or by non-acid or base catalyzed means and include photocurable coatings such as by photocuring systems which are known in the art. They can be cold-cured, heat cured or radiation cured depending on the curing system. The solvent borne lacquers preferably contain low VOC or HAPS acceptable organic solvents. The lacquers can also be essentially free of organic solvent, as in so-called high-solids, aqueous-based or solventless coatings, including powder coatings.

The coatings contain at least one UV absorber. UV Absorbers included in the stabilized curable film forming polymer composition can be selected from the many available types, such as:

hydroxyphenyl benzotriazoles, hydroxyphenyl triazines, hydroxybenzophenones, UV absorbing succinic or malonic acid esters, phenylsalicylates, cyanophenylcinnamates, hindered benzoates, cyanophenylacrylates, and cyanodiphenylacrylates, cyanocinnamamides, and oxalanilides.

<u>Specific examples of UV absorbers include:</u>

- 2-(2'-Hydroxyphenyl)-benzotriazoles, including, for example:
- 2-(2'-Hydroxy-5-methylphenyl)-benzotriazole,
- 2-(3',5'-di-tert-butyl-2'-hydroxyphenyl)-benzotriazole,
- 2-(5'-tert-butyl-2'-hydroxyphenyl)-benzotriazole,
- 2-(2'-hydroxy-5'(1,1,3,3-tetramethylbutyl)-phenyl)-benzotriazole,
- 2-(3',5'-di-tert-butyl-2'-hydroxyphenyl)-5-chlorobenzotriazole,
- 2-(3'-tert-butyl-2'-hydroxy-5'-methylphenyl)-5-chlorobenzotriazole,
- 2-(3'-sec-butyl-5'-tert-butyl-2'-hydroxyphenyl)-benzotriazole,
- 2-(2'-hydroxy-4'-octyloxyphenyl)-benzotriazole,
- 2-(3',5'-di-tert-amyl-2'-hydroxyphenyl)-benzotriazole,
- 2-(3',5'-bis($\alpha$,$\alpha$-dimethylbenzyl)-2'-hydroxyphenyl)-benzotriazole,
- 2-(3'-tert-butyl-5'-[2-(2-ethylhexyloxy)-carbonylethyl]-2'-hydroxyphenyl)-5-chlorobenzotriazole,
- 2-(3'-dodecyl-2'-hydroxy-5'-methylphenyl)-benzotriazole,
- 2-(3'-tert-butyl-2'-hydroxy-5'-(2-isooctyloxycarbonylethyl)-phenyl)-benzotriazole,
- 2,2'-methylenebis-[4-(1,1,3,3-tetramethylbutyl)-6-benzotriazole-2-yl-phenol],
- 2-(3'-tert-butyl-5'-[2-(2-ethylhexyloxy)-carbonylethyl]-2'-hydroxyphenyl)-benzotriazole,
- 2-(3'-tert-butyl-2'-hydroxy-5'-(2-methoxycarbonylethyl)-phenyl)-5-chlorbenzotriazole,
- 2-(3'-tert-butyl-2'-hydroxy-5'-(2-methoxycarbonylethyl)-phenyl)-benzotriazole,
- 2-(3'-tert-butyl-2'-hydroxy-5'-(2-octyloxycarbonylethyl)-phenyl)-benzotriazole,
- mixture of 2-(3'-tert-butyl-2'-hydroxy-5'-(2-octyloxycarbonylethyl)-phenyl)-5-chlorobenzotriazole isomers,
- transesterification product of 2-[3'-tert-butyl-5'-(2-methoxycarbonylethyl)-2'-hydroxyphenyl]-2H-benzotriazole with polyethylene glycol 300,
- transesterification product of 2-[3'-tert-butyl-5'-(2-methoxycarbonylethyl)-2'-hydroxyphenyl]-2H-benzotriazole with hexanediol-1,6.

Reactive benzotriazoles such as:

- 2-(2'-hydroxy-5'-methacrylyloxyethylphenyl)-benzotriazole,
- 2-[2'-hydroxy-5'-(2-hydroxyethyl)-phenyl]-benzotriazole,

o-Hydroxyphenyl-1,3,5-triazines including for example:

- 2,4,6-tris-(2-hydroxy-4-octyloxyphenyl)-1,3,5-triazine,
- 2-(2-hydroxy-4-octyloxyphenyl)-4,6-bis-(2,4-dimethylphenyl)-1,3,5-triazine,
- 2-(2,4-dihydroxyphenyl)-4,6-bis-(2,4-dimethylphenyl)-1,3,5-triazine,
- 2,4-bis-(2-hydroxy-4-propyloxyphenyl)-6-(2,4-dimethylphenyl)-1,3,5-triazine,
- 2-(2-hydroxy-4-octyloxyphenyl)-4,6-bis-(4-methylphenyl)-1,3,5-triazine,
- 2-(2-hydroxy-4-dodecyloxyphenyl)-4,6-bis-(2,4-dimethylphenyl)-1,3,5-triazine,
- 2-(2-hydroxy-4-tridecyloxyphenyl)-4,6-bis-(2,4-dimethylphenyl)-1,3,5-triazine,
- 2-(2-hydroxy-4-(6-hydroxyhexyloxy)phenyl)-4,6-bis-(2,4-dimethylphenyl)-1,3,-triazine,
- 2-[2-hydroxy-4-(6-(meth)acryloylhexyloxy)phenyl]-4,6-bis-(2,4-dimethylphenyl)-1,3,5-triazine

reaction products of 2-(2,4-dihydroxyphenyl)-4,6-bis-(2,4-dimethylphenyl)-1,3,5-triazine, with [(alkyloxy)methyl] oxiranes like:

- 2-[2-hydroxy-4-((2-hydroxy-3-butyloxy)propyloxy)-phenyl]-4,6-bis-(2,4-dimethylphenyl)-1,3,5-triazine,
- 2-[2-hydroxy-4-((2-hydroxy-3-octyloxy)propyloxy)-phenyl]-4,6-bis-(2,4-dimethylphenyl)-1,3,5-triazine,
- 2-[2-hydroxy-4-((2-hydroxy-3-dodecyloxy)propyloxy)-phenyl]-4,6-bis-(2,4-dimethylphenyl)-1,3,5-triazine,
- 2-[2-hydroxy-4-((2-hydroxy-3-tridecyloxy)propyloxy)-phenyl]-4,6-bis-(2,4-dimethylphenyl)-1,3,5-triazine,
- 2,4,6-tris-[2-hydroxy-4-((3-butoxy-2-hydroxy)propyloxy)-phenyl]-1,3,5-triazine,
- 2-(2-hydroxy-4-hexyloxy)-phenyl-4,6-diphenyl-1 ,3,5-triazine,
- 2-(2-hydroxy-4-methoxyphenyl)-4,6-diphenyl-1,3,5-triazine,
- 2-(2-hydroxyphenyl)-4-(4-methoxyphenyl)-6-phenyl-1,3,5-triazine,
- 2,4-bis-(2,4-dihydroxyphenyl)-6-(2,4-dimethylphenyl)-1,3,5-triazine,
- 2,4-bis-(2,4-dihydroxyphenyl)-6-(4-chlorophenyl)-1,3,5-triazine,
- 2,4-bis-(2,4-dihydroxyphenyl)-6-(4-bromophenyl)-1,3,5-triazine,
- 2,4-bis-(2-hydroxy-4-(2-hydroxyethoxy)phenyl)-6-(4-chlorophenyl)-1,3,5-triazine,
- 2,4-bis-(2-hydroxy-4-(2-acetoxyethoxy)phenyl)-6-(4-chlorophenyl)-1,3,5-triazine,
- 2,4-bis-(2-hydroxy-4-(2-hydroxyethoxy)phenyl)-6-(2,4-dimethylphenyl)-1,3,5-triazine,

2-Hydroxy-benzophenones, for example

the 4-hydroxy-, 4-methoxy-, 4-octoxy, 4-decyloxy-, 4-dodecyloxy-, 4-benzyloxy, 4,2',4'-trihydroxy- and 2'-hydroxy-4,4'-dimethoxy derivatives.

Esters of optionally substituted benzoic acids, for example

phenyl salicylate, 4-tert-butylphenyl salicylate, octylphenyl salicylate, dibenzoylresorcinol, bis-(4-tert-butylbenzoyl)-resorcinol, benzoylresorcinol, 3,5-di-tert-butyl-4-hydroxybenzoic acid 2,4-di-tert-butylphenyl ester, 3,5-di-tert-butyl-4-hydroxybenzoic acid hexadecyl ester, benzoic acid 4-aminoethyl ester, polymer with oxirane, and the octyl triazone or 2,4,6-trianilino- ρ(-carbo-2'-ethylhexyl-1'-oxy)-1,3,5-triazine and 4-bis(polyethoxy)aminobenzoic acid polyethoxy ethyl ester.

Oxalic acid diamides, for example

4,4'-di-octyloxy-oxanilide, 2,2'-di-octyloxy-5,5'-di-tert-butyl-oxanilide, 2,2'-di-dodecyloxy-5,5'-di-tert-butyl-oxanilide, 2-ethoxy-2'-ethyl-oxanilide, N,N'-bis (3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy- as well as of o- and p-ethoxy-disubstituted oxanilides.

Acrylates, for example

α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline.

Nickel compounds, for example

nickel complexes of 2,2'-thio-bis-[4-(1,1,3,3-tetra-methylbutyl)-phenol], such as the 1:1 or 1:2 complex, optionally with additional ligands such as n-butylamine, triethanolamine or N-cyclohexyl-diethanolamine, nickel dibutyldithiocarbamate, nickel salts of 4-hydroxy-3,5-di-tert-butylbenzylphosphonic acid monoalkyl, esters, such as of the methyl, ethyl or butyl ester, nickel complexes of ketoximes such as of 2-hydroxy-4-methyl-phenyl undecyl ketoxime, nickel complexes of 1-phenyl-4-lauroyl-5-hydroxy-pyrazole, optionally with additional ligands.

Further additives which can be contained in the coating lacquers of the present invention include other sterically hindered amines, the antioxidants, for example sterically hindered phenol derivative type, organic phosphorus compounds for example phosphites, phosphonites or phosphines, plasticizers, leveling agents, curing accelerators, for example organic Co, Mn or Zr salts, thickeners, dispersing agents or adhesion promoter.

Sterically hindered amines other than HALS-III are for example bis-(2,2,6,6-tetramethylpiperidyl) sebacate, bis-(1,2,2,6,6-pentamethylpiperidyl) sebacate, n-butyl-3,5-di-tert.-butyl-4-hydroxybenzyl malonic acid bis-(1,2,2,6,6-pentanemethylpiperidyl)ester, condensation product of 1-hydroxyethyl-2,2,6,6-tetramethyl-4-hydroxypiperidine and succinic acid, condensation product of N,N'-(2,2,6,6-tetramethylpiperidyl)-hexamethylenediamine and 4-tert-octylamino-2,6-dichloro-s-triazine, tris-(2,2,6,6-tetramethylpiperidyl)-nitrilotriacetate, tetrakis-(2,2,6,6-tetramethyl-4-piperidyl) 1,2,3,4-butanetetracarboxylate, 1,1'(1,2-ethanediyl)-bis-(3,3,5,5-tetramethylpiperazinone), and alkyl[3-[(2,2,6,6-tetramethyl-4-piperidinyl)oxy]-propyl]silanediol homopolymer.

Adhesion promoters are typically based, for example on modified silanes, titanates, or zirconates. Suitable photoinitiators are those based on benzophenones, phenyl glyoxylates, bis- or mono-acylphosphine oxides, α-hydroxy ketones or benzyl dimethyl ketals and especially combinations thereof.

Specifically, the hindered alkylated phenolics include:

- 2,6-di-tert-butyl-4-methylphenol,
- 2,6-di-tert-butyl-4-methoxyphenol,
- 2-tert-butyl-4,6-dimethylphenol,
- 2,6-di-tert-butyl-4-ethylphenol,
- 2,6-di-tert-butyl-4-n-butylphenol,
- 2,6-di-tert-butyl-4-i-butylphenol,
- 2,6-di-cyclopentyl-4-methylphenol,
- 2,6-di-phenyl-4-octadecyloxyphenol;
- 2-(α-methylcyclohexyl)-4,6-dimethylphenol,
- 2,6-di-octadecyl-4-methylphenol,
- 2,4,6-tri-cyclohexylphenol,
- 2,6-di-tert-butyl-4-methoxymethylphenol,
- n-octadecyl 3,5-di-tert-butyl-4-hydroxyhydrocinnamate,
- neopentanetetrayl tetrakis(3,5-di-tert-butyl-4-hydroxyhydrocinammate),
- di-n-octadecyl 3,5-di-tert-butyl-4-hydroxybenzylphosphonate,
- 1,3,5-tris(3,5-di-tert-butyl-4-hydroxybenzyl)isocyanurate,
- thiodiethylene bis(3,5-di-tert-butyl-4-hydroxyhydrocinnamate),
- 1,3,5-trimethyl-2,4,6-tris(3,5-di-tert-butyl-14-hydroxybenzyl)benzene,
- 3,6-dioxaoctamethylene bis(3-methyl-5-tert-butyl-4-hydroxyhydrocinnamate),
- 2,6-di-tert-butyl-p-cresol, 2,2'-ethylidene-bis(4,6-di-tert-butylphenol),
- 1,3,5-tris(2,6-dimethyl-4-tert-butyl-3-hydroxybenzyl)isocyanurate,
- 1,1,3,-tris(2-methyl-4-hydroxy-5-tert-butyl-phenyl)butane,
- 1,3,5-tris[2-(3,5-di-tert-butyl-4-hydroxyhydrocinnamoyloxy)ethyl]isocyanurate,

- 3,5-di-(3,5-di-tert-butyl-4-hydroxybenzyl)mesitol,
- hexamethylene bis(3,5-di-tert-butyl-4-hydroxyhydrocinnamate),
- 1-(3,5-di-tert-butyl-4-hydroxyanilino)-3,5-di(octylthio)-s-triazine,
- N,N'-hexamethylene-bis(3,5-di-tert-butyl-4-hydroxyhydrocinnamamide),
- calcium bis(ethyl 3,5-di-tert-butyl-4-hydroxybenzylphosphonate),
- ethylene bis[3,3-di(3-tert-butyl14-hydroxyphenyl)butyrate],
- octyl 3,5-di-tert-butyl-4-hydroxybenzylmercaptoacetate,
- bis(3,5-di-tert-butyl-4-hydroxyhydrocinnamoyl)-hydrazide, and
- N,N'-bis[2-(3,5-di-tert-butyl-4-hydroxyhydrocinnamoyloxy)-ethyl]-oxamide, and the like;

alkylated hydroquinones, for example,

- 2,5-di-tert-butyl-hydroquinone,
- 2,5-di-tert-amyl-hydroquinone,

hydroxylated thiodiphenyl ethers, for example,

- 2,2'-thio-bis-(6-tert-butyl-4-methylphenol),
- 2,2'-thio-bis-(4-octylphenol),
- 4,4'-thio-bis-(6-tert-butyl-3-methylphenol),
- 4,4'-thio-bis-(6-tert-butyl-2-methylphenol), and the like;

alkylidene-bisphenols, for example,

- 2,2'-methylene-bis-(6-tert-butyl-4-methylphenol),
- 2,2'-methylene-bis-(6-tert-butyl-4-ethylphenol),
- 2,2'-methylene-bis-[4-methyl-6-(a-methylcyclohexyl)-phenol],
- 2,2'-methylene-bis-(4-methyl-6-cyclohexylphenol),
- 2,2'-methylene-bis-(6-nonyl-4-methylphenol),
- 2,2'-methylene-bis-[6-(a -methylbenzyl)-4-nonylphenol],
- 2,2'-methylene-bis-[6-(a,a -dimethylbenzyl)-4-nonylphenol],
- 2,2'-methylene-bis-(4,6-di-tert-butylphenol),
- 2,2'-ethylidene-bis-(4,6-di-tert-butylphenol),
- 2,2'-ethylidene-bis-(6-tert-butyl-4-isobutylphenol),
- 4,4'-methylene-bis-(2,6-di-tert-butylphenol),
- 4,4'-methylene-bis-(6-tert-butyl-2-methylphenol),
- 1,1-bis-(5-tert-butyl-4-hydroxy-2-methylphenyl)-butane,
- 2,6-di-(3-tert-butyl-5-methyl-2-hydroxybenzyl)-4-methylphenol,
- 1,1,3-tris-(5-tert-butyl-4-hydroxy-2-methylphenyl)-butane,
- 1,1-bis-(5-tert-butyl-4-hydroxy-2-methylphenyl)-3-n-dodecylmercaptobutane,
- ethyleneglycol-bis-[3,3-bis-(3'-tert-butyl-4'-hydroxyphenyl)-butyrate],
- di-(3-tert-butyl-4-hydroxy-5-methylphenyl)-dicyclopentadiene,
- di-[2-(3'-tert-butyl-2'-hydroxy-5'-methyl-benzyl)-6-tert-butyl-4-methylphenyl]terephthalate, and the like;

benzyl compounds, for example,

- 1,3,5-tri-(3,5-di-tert-butyl-4-hydroxybenzyl)-2,4,6-trimethylbenzene,
- di-(3,5-di-tert-butyl-4-hydroxybenzyl) sulfide,
- 3,5-di-tert-butyl-4-hydroxybenzyl-mercapto-acetic acid isooctyl ester,
- bis-(4-tert-butyl-3-hydroxy-2 ,6-dimethylbenzyl)dithiol terephthalate,

- 13,5-tris-(3,5-di-tert-butyl-4-hydroxybenzyl) isocyanurate,
- 1,3,5-tris-(4-tert-butyl-3-hydroxy-2,6-dimethylbenzyl)isocyanurate,
- 3,5-di-tert-butyl-4-hydroxybenzyl-phosphoric acid dioctadecyl ester,
- 3,5-di-tert-butyl-4-hydroxybenzyl-phosphoric acid monoethyl ester, calcium-salt, and the like;

acylaminophenols, for example,

- 4-hydroxy-lauric acid anilide,
- 4-hydroxy-stearic acid anilide,
- 2,4-bis-octylmercapto-6-(3,5-tert-butyl-4-hydroxyanilino)-s-triazine,
- octyl-N-(3,5-di-tert-butyl-4-hydroxyphenyl)-carbamate, and the like;
  esters of β-(3,5-di-tert-butyl-4-hydroxyphenyl)-propionic acid with monohydric or polyhydric alcohols;
  esters of β-(5-tert-butyl-4-hydroxy-3-methylphenyl)-propionic acid with monohydric or polyhydric alcohols;

amides of β-(3,5-di-tert-butyl-4-hydroxyphenyl)-propionic acid, for example,

- N,N'-di-(3,5-di-tert-butyl-4-hydroxyphenylpropionyl)-hexamethylenediamine,
- N,N'-di-(3.5-di-tert-butyl-4-hydroxyphenylpropionyl)-dimethylenediamine,
- N,N'-di-(3,5-di-tert-butyl-4-hydroxyphenylpropionyl)-hydrazine, and the like.

Metal deactivators are optional, and include, for example, N,N'-diphenyloxalic acid diamide, N-salicylal-N'-salicyloylhydrazine, N,N'-bis-salicyloylhydrazine, N,N'-bis-(3,5-di-tert-butyl-4-hydroxyphenylpropionyl)-hydrazine, 3-salicyloylamino-1,2,4-triazole, bis-benzylidene-oxalic acid dihydrazide.

Phosphanes (PR3), phosphites and phosphonites, include, for example, triphenyl phosphite, diphenylalkyl phosphites, phenylalkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, di-isodecylpentaerythritol diphosphite, di-(2,4-di-tert-butylphenyl)pentaerythritol diphosphite, tristearyl-sorbitol triphosphite, tetrakis-(2,4-di-tert-butylphenyl) 4,4'-diphenylylenediphosphonite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol di phosphite, tristearyl sorbitol triphosphite, tetrakis(2,4-di-tert-butylphenyl) 4,4'-biphenylene diphosphonite, 6-isoctyloxy-2,4,8, 10-tetra-tert-butyl-12H-dibenz[d,g]-1,3,2-dioxaphosphocin, 6-fluoro-2,4,8,10-tetra-tert-butyl-12-methyl-dibenz[d,g]-1,3,2-dioxaphosphocin, bis(2,4-di-tert-butyl-6-methyl-phenyl)methylphosphite or bis(2,4-di-tert-butyl-6-methylphenyl)ethylphosphite. Phosphite or phosphonite, for example is suggested in an amount of from 0.01 to 10%, preferably 0.02 to 5%, in particular 0.05 to 3%, by weight relative to the total solids of the powder composition

Examples of anticorrosion agents are anticorrosion pigments, such as phosphate- or borate-containing pigments or metal oxide pigments, or other organic or inorganic corrosion inhibitors, for example salts of nitroisophthalic acid, phosphoric esters, technical-grade amines or substitute benzotriazoles.

Thiosynergists, include, for example, dilauryl thiodipropionate or distearyl thiodipropionate.

Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

The other stabilizer additive(s) combinable with HALS III are generally employed in a quantity of from 0.1 to 10%, preferably 0.2 to 5%, in particular 0.5 to 3%, by weight of the total solids of the liquid or powder coating composition.

The weight ratio of HALS III with the optional additives is for example 95:5 to 5:95, 90:10 to 10:90, 80:20 to 20:80, 70:30 to 30:70, 60:40 to 40:60 or 50:50.

Fillers, for example, include calcium carbonate, silicates, talc, kaolin, mica, barium sulfate, metal oxides and hydroxides, carbon black, graphite.

Other optional additives are, for example, plasticizers, pigment(s), lubricants, emulsifiers, $TiO_2$, micronized $TiO_2$, and an inorganic UV screener based on zinc hydrotalcite of the formula

$$(Zn_yM^{2+}{}_z)_{1-x}M^{3+}{}_xO_{1+x/2}$$

wherein $M^{2+}$ is at least one metal such as Mg, Ca, Ni, and Cu; $M^{3+}$is at least one metal selected from the group of Al and Fe, and x, y and z each satisfy $0.2 \leq X \leq 0.75$; the hydrotalcite having a major diameter of 0.1 to 2 μm, and thickness 0.01 to 0.3 μm, an aspect ratio of 2 to 200 and a secondary particle diameter of not more than 5 μm, such as disclosed in U.S. Patent No. 5,750,609, incorporated herein by reference.

The coating systems can be applied to wood, plastic or metal. Solvent-borne coatings advantageously employ an organic solvent solution of the film forming polymer with the polymeric hindered amine and UV absorber(s) (UVA). The coating can be contained in the form of mono-coats and electro-coating (e-coating) systems. E-coating systems typically comprise an electro-coated primer (e-coat) used to adhere to a conductive substrate such as a metal panel. The coating composition can be applied as an e-coat, a surface primer, in a pigmented base coat or in a color coat applied thereto, or in a clear coat that is applied to the pigmented base coat. In multi-layered coatings, a different film forming polymer in each layer, each in combination with the reaction product of (I) or (II) above and a UVA can be used in each layer.

Coatings included which are liquid in the uncured state, and form a continuous film on a substrate therefore include the conventional stoving lacquers, or air cured coatings, eg. used in applications such as for automobile finishing, for example, alkyd, alkyd/melamine, alkyd/acrylic/melamine, acrylic, 1- or 2-component urethane, thermosetting acrylic, acid-cured thermoset acrylics, acrylic/urethane combinations, polyester/urethane, epoxy, epoxy hybrids, e.g. epoxy-urethane, and epoxy-polyester. The acrylic resin lacquers, which can be stabilized against light, moisture and oxygen in accordance with the invention, are the conventional acrylic resin stoving lacquers or thermosetting resins including acrylic/melamine systems which are described, for example, in H. Kittel's "Lehrbuch der Lacke und Beschichtungen", Vol. 1. Part 2. on page 735 and 742 (Berlin 1972), "Lackkunstharze" (1977), by H. Wagner and H. F. Sarx, on pages 229-238, and in S. Paul's "Surface Coatings: Science and Technology" (1985).

The polyester lacquers, which can be stabilized against the action of light and moisture, are the conventional stoving lacquers described e.g. in H. Wagner and H.F. Sarx, op.cit., on pages 86-99.

The alkyd resin lacquers which can be stabilized against the action of light and moisture in accordance with the invention, are the conventional stoving lacquers which are used in particular for coating automobiles (automobile finishing lacquers), for example lacquers based on alkyd/melamine resins and alkyd/acrylic/melamine resins (see H. Wagner and H.F. Sarx, op. cit., pages 99-123). Other crosslinking agents include glycoluril resins, blocked isocyanates or epoxy resins.

The thermoset resins include the polyepoxide (epoxy), epoxy-polyester, vinyl, alkyd, acrylic and polyester resins, and modified versions. The film forming polymer can optionally be modified with polysiloxanes, silicone, fluorine, or capped with isocyanates or iso-cyanurates. The epoxy and epoxy-polyester resins can be cured with cross-linkers such as acids, acid anhydrides, amines and the like. The epoxide polymers or precursors, typically as liquids, may be utilized as the crosslinking agent for various acrylic or polyester resin systems that have been modified by the presence of reactive groups on the backbone structure. Other examples of the film forming polymers are one- or two-component polyurethane coatings based on masked polyisocyanate curing sites; two-component coatings based on (poly) ketimines and aliphatic or aromatic polyisocyanates; two-component coatings based on (poly)ketimines and an unsaturated acrylate resin or a polyacetoacetate resin or a polymethacrylamidoglycolate; two-component coatings based on polyacrylates and polyepoxides containing carboxyl or amino groups; two-component coatings based on acrylate resins containing anhydride groups and a polyhydroxy or polyamino component; two-component coatings based on unsaturated polyacrylates and polymalonates; siloxane-modified acrylate resins; and fluorine-modified acrylate resins.

The conventional coatings include "1K" or "2K", mono-coats, low solids "LS", medium solids, "MS", and high solids, "HS" coatings. Coatings used herein are cured with or without heat, and/or with or without catalyst. Heat and catalyst are preferably applied.

The preferred coatings of the present invention accordingly comprise, in the presence or absence of a solvent, a film forming polymer selected from polyurethane, thermosetting acid cured acrylic and melamine resin, thermosetting acrylic/urethane, thermosetting polyester/urethane, and polyepoxide polymer, together with the polymeric hindered amine, UVA absorber(s), and optional formulating ingredients.

The preparation of the powder coating embodiment of the present invention can be carried out in accordance with customary methods. A good description of the procedures and machinery can be found in T.A. Misev in "Powder Coatings: Chemistry and Technology", John Wiley & Sons, Chichester, 1991, Chapter 5.

In general, all of the components of the powder coating compositions are weighed out and mixed together in an appropriate mixer. Mixers used for this purpose are tumble mixers, cone mixers, double-cone mixers, horizontal mixers, blenders and stirring units such as planetary mixers. Normally, the powder coating formulation is first processed in a heated extruder at temperatures, which are typically in the range 70-120°C, to obtain a melted homogeneous mass. Apparatus suitable for this includes single-screw co-kneader, twinscrew extruders and planetary extruders. Addition is made in most cases by way of a screw conveyor, a conveyor belt or a shaking trough. Following extrusion the hot mass is rolled out and cooled, for example on a cooling belt. When it has solidified, the mass is crushed and then ground. Suitable grinding units are pinned-disc mills, ultracentrifugal mills, jet mills and, especially, classifying mills.

The powder may be subsequently classified and is preferably sieved. If desired, additional substances can be blended into the powder before sieving, for example antiacking agents such as silica or metal flake pigments.

The powder coating compositions have preferably a mean particle size of from 5 µm to 100 µm, and more preferably a mean particle size in the range of from 30 µm to 50 µm.

Other techniques for the preparation of powder coatings (EP-B-368 851 or WO-A-92/00342) have recently been disclosed which can also be employed for this invention. In these techniques the premixed formulation or extrudate is fed to a heated rotary tube and is spun out centrifugally on a rotating plate. At the edge of the plate, round, virtually monodisperse droplets are formed which solidify in cooled air before falling into a hopper.

A recent technique of preparing powder coating powders is described in EP-A-661 091 and WO-A-94/009 913. Here all the components of the powder coating formulation are mixed together in the presence of a super-critical liquid, which is preferably carbon dioxide. The mixture is sprayed out of fine jets in such a way as to give rounded particle of powder paint of the required size when the carbon dioxide is flashed off.

In cases where the polymeric component of the powder coating compositions is either a very low melting point solid (<50°C) or liquid, problems may arise in handling, as sticky or liquid products cannot be easily mixed together and fed into an extruder. Difficulties may also arise when the polymeric component is a solid with a high melting point (>120°C) or high melt viscosity as such products often do not homogenize completely in the resin on extrusion. In such cases it has been found useful to use components in the form of a masterbatch.

An alternative method of using component oligomeric HALS in powder coatings according to this invention is in a form absorbed onto a porous solid. This is particularly useful if components other than the oligomeric HALS happen to be liquid or resinous solids at room temperature. This can be the case where the oligomeric HALS is dissolved together with the other additives, and this mixture is a liquid or resinous solid. The amount of the liquid mixture that can be absorbed onto the absorbent is limited only by the need for the final product to be in the form of a free-flowing powder, as such a powder can be easily mixed together with the other components of the powder coating formulation prior to extrusion. For this use an absorbent is generally chosen that has a high oil absorbance value, together with a low particle size to reduce matting; suitable absorbents are alumina and particularly silica.

The coating materials herein are employed as metal finish coatings and solid shade finishes, as well as various coil coating applications. The coatings are preferably applied in the conventional manner by the single-coat method or by the two-coat method. In the latter known method, the pigment-containing base coat is applied first and then a covering coat of clear lacquer is applied.

In general, from 0.1 to 10% by weight on the total resin solids (TRS) of compounds of the disclosed HALS III will give technical effects on the resin polymer to be stabilized. Preferably, from 0.2% to 5% on TRS is used. A ratio of HALS to UV absorber(s) typically is kept in a range of from 1:2 to 3:1.

In general, the disclosed HALS III can be added to the film forming polymer(s) before, during or after the polymerization but before curing the coating. The HALS III can be incorporated in the film forming polymer(s) in neat form or encapsulated in waxes, oils or solvents, aqueous emulsions with or without organic solvent(s), or dispersions.

Coatings according to the invention include those with low volatile organic content (VOC). Solvents and combinations of organic solvent with water can be made in order that the overall VOC is kept low enough to be qualified under local, state and federal environmental regulations. By the practice of the invention, owing to the exceptional solubility of the coating in preferred solvents, increasing amounts of water can be used to replace the VOC component (s).

Exemplary volatile organic solvents are the hydrocarbons, ketones, ethers, acetates, aromatics, and alcohols, and the like. Exemplary preferred volatile organic solvents which are suitable include n-butanol, p-chlorobenzotrifluoride, n-butyl acetate, methyl acetate, acetone, 2-heptanone, ethyl acetate, xylene, isopropyl acetate, 2-ethoxyethyl acetate, methyl isobutyl ketone, 2-ethoxybutyl acetate, 1-methoxy-2-propanol, methylethyl ketone, N-methyl pyrrolidone, and ethyl 3-ethoxypropionate.

The disclosed HALS III can be incorporated in or over the film forming polymer(s) by various processes, such as dry mixing in the form of powder, as for a powder-type film forming coating or wet mixing in the form of solutions or suspensions or also in the form of a masterbatch; in such operations, the film forming polymer can be used in the form of powder, granules, solutions, suspensions or in the form of latices.

The film forming polymer(s) stabilized with the oligomer HALS is advantageously used for the production of paints, coatings, cast films, cast tapes, bonded coatings, and the like.

A further preferred embodiment of this invention is a masterbatch comprising a polyester, an epoxy resin or a polyacrylate and at least two different stabilizers one of which is an oligomeric or polymeric HALS III.

A masterbatch is essentially a concentrate of components dispersed or preferably dissolved in one of the resin-forming components, such as polyester, epoxy resin or polyacrylate. The amount of additives that the masterbatch may contain is limited only by considerations of solubility and the physical properties of the masterbatch, such as the tendency to cake on storage. Values may vary from 5 - 90% by weight, preferably 5 - 60% by weight, more preferably 5 - 40% by weight and most preferably 5 - 30% by weight of the component oligomeric HALS in a masterbatch.

For all types of resins a masterbatch can be made at some stage during the resin synthesis. For example, in the case of polyesters, which are usually prepared at temperatures of ca. 240°C, the oligomeric HALS can be conveniently and preferably dissolved up in the hot resin after synthesis during the cool-down cycle. If an extruder is used to make the masterbatch then, of course, the other reactive component of the powder coating is omitted and a higher melt temperature can be used if desired. Other components of powder coatings, such as flow aids, degassing agents etc. can be incorporated into the masterbatch containing the oligomeric HALS if convenient.
The examples, which follow, illustrate the invention in more detail. Parts and percentages are by weight, unless stated otherwise.

## EXAMPLES

Coating performance was compared among the following formulations containing hindered amine additives as component (A):

HALS 1: HALS III according to the invention. $R^2$-$R^3$ = $-(CH_2)_{11}$ -, $R^1$ = $CH_3$ $R^4$ =H, number average molecular weight 500- 5000.

HALS 2: bis (1,2,2,6,6-pentamethyl-4-piperidyl) sebacate; commercially available from Ciba Specialty Chem. under the TINUVIN® 292 designation;

HALS 3: 3-dodecyl-1-(2,2,6,6-tetramethyl-4-piperidinyl)-2,5-pyrrolidinedione; commercially available from Clariant Corp. under the SANDUVOR® 3055 designation;

HALS 4: propanedioic acid,[(4-methoxyphenyl)-methylene]-bis(1,2,2,6,6-pentamethyl-4-piperidinyl) ester; commercially available from Clariant Corp. as SANDUVOR® PR-31;

HALS 5: 1,3-propanediamine, N,N"-1,2-ethanediylbis-, polymer with 2,4,6-trichloro-1,3,5-triazine, reaction products with N-butyl-2,2,6,6-tetramethyl-4-piperidinamine; which is commercially available from Sigma as UVASORB® HA-88;

HALS 6: 7-Oxa-3,20-diaxaspiro [5.1.11.2] heneicosane-20-propanoic acid; commercially available from Clariant as SANDUVOR® 3050;

HALS 7: 1,6-hexanediamine, N,N'-bis(2,2,6,6-tetramethyl-4-piperidinyl)-, polymer with 2,4-dichloro-6-(4-morpholinyl)-1,3,5-triazine; commercially available from CYTEC as CYAGARD® 3346.

HALS 8: poly ((6- (1,1,3,3-tetramethyl butyl) amino)-1,3,5-triazine-2,4-diyl); ((2,2,6,6-tetramethyl-4-piperidinyl)imino)- 1,6-hexanediyl((2,2,6,6-tetramethyl-4-piperidinyl) imino); commercially available from Ciba Spec. Chem. as CHIMASSORB® 944.

HALS 9: bis(2,2,6,6-tetramethyl-4-piperidinyl) sebacate; commercially available from Ciba Specialty Chemicals as TINUVIN® 770.

The disclosed HALS 1 was found to be soluble in high concentrations in the following solvents at greater than 100 g per 100 g solvent:

| | **solubility g/l** | | **solubility g/l** |
|---|---|---|---|
| n-butanol | > 1000 | | |
| n-butyl acetate | > 1000 | 2-heptanone | >1068 |
| ethyl acetate | > 1000 | xylene | >410 |
| isopropyl acetate | > 1000 | 2-ethoxyethyl acetate | >1200 |
| methyl isobutyl ketone | > 1000 | 2-ethoxybutyl acetate | >1200 |
| 1-methoxy-2-propanol | > 1100 | methylethyl ketone | >1000 |
| N-methyl pyrrolidone | >1200 | ethyl 3-ethoxypropionate | >922 |

(continued)

| | solubility g/l | | solubility g/l |
|---|---|---|---|
| Oxsal 100 | > 1005 | | |

Component B - UV absorbers used:

UVA 1: Sanduvor® PR-25;
UVA 2: Tinuvin® 400;
UVA 3: Sanduvor® 3206;
UVA 4: Tinuvin® 1130
UVA 5: Cyagard® II64L

The additive concentrations given in the tables below are in weight percent (%) of active substance.

**EXAMPLE 1**

Film forming polymer system: thermosetting acrylic. The following formulation was prepared as a 33.3% by wt. solution:

| Component | amount (wt.%) |
|---|---|
| Thermoset acrylic[1] | 53.3 |
| melamine[2] | 8.3 |
| Surfactants[3] | 5.1 |
| Solvent blend[4] | 33.3 |

[1]ACRYLOID AT-63,
[2] CYMEL325,
[3] Byk 070 and Dispersbyk D163,
[4] SOLVENT BLEND: Xylene (40%); aromatic 100 (40%); n-butanol (20%),

The coating formula containing the indicated additive was poured onto a chromate rinsed AL panel and drawn down using a S40 wire wound rod to a film thickness of approx. 30 mils. and cured at 120° C for 30 minutes. Exposure was made to QUV 313 bulb for the indicated time.
In this series of comparisons, the formulation contained no UV absorber.

TABLE 1

| | | (%) 20° Gloss Retention after exposure |
|---|---|---|
| **Example** | **HALS type/level** | **1000 hr.** |
| A | Unstabilized | 8 |
| B | HALS 1@1% | 50 |
| C | HALS 2 @ 1% | 30 |
| D | HALS 3 @ 1% | 37 |
| E | HALS 4 @ 1% | 40 |
| F | HALS 5 @ 1% | 34 |
| G | HALS 7 @ 1% | 43 |
| H | HALS 8 @ 1% | 33 |
| I | HALS 9 @ 1% | 48 |

**EXAMPLE 2**

Film forming polymer: thermoset polyester/polyurethane. The following formulation was prepared as a 40% by wt.:

| Component | Wt. Amount |
|---|---|
| polyester polyol[1] | 34.5 |
| aliphatic polyisocyanate[2] | 23.5 |
| Amine catalyst[3] | 0.8 |
| Cellosolve acetate | 41.2 |

[1] DESMOPHEN 651A-65, ex Bayer;
[2] DESMODUR N75;
[3] DESMORAPID PP

The formula was drawn down using a S40 wire wound on chromate rinsed aluminum panel and cured at 60° C for 2 hours. Exposure was made to QUV 313 bulb for the indicated time.

TABLE 2

| | | (%) 20° Gloss Retention after exposure | |
|---|---|---|---|
| **Example** | **Additive type/level** | **2000 hr.** | **2500 hr.** |
| **A** | Unstabilized | 46 | 28 |
| **B** | HALS 1@1% | 53 | 47 |
| **C** | HALS 2 @ 1% | 49 | 43 |
| **D** | HALS 3 @ 1% | 48 | 40 |
| **E** | HALS 4 @ 1% | 43 | 36 |
| **F** | HALS 5 @ 1% | 44 | 39 |
| **G** | HALS 6&3 @ 0.5% each | 36 | 28 |
| **H** | HALS 6 @ 1% | 46 | 39 |
| **I** | HALS 7 @ 1% | ** | ** |
| **J** | HALS 9 @ 1% | 29 | 28 |

**Insoluble-could not test

**EXAMPLE 3**

The resin of the clear coat is a so-called 2-component polyurethane coating, available as Clear FF95-0104 and the hardener is available as SC29-0160. The ratio of the resin to the hardener was 77:23. The base coat is available as Glasurit® Metallic L54 silver 060. Both the components of the clear coat and the base coat are obtainable from BASF.

The two layer coating system was applied onto aluminum panels with a 30 minutes curing at 140°C and submitted to artificial weathering in an Atlas UV-conB according to the conditions of ASTM G53-96 or NFT 30-036, with a 313 nm lamp and a cycle (8 hours light 70°C - 4 hours Cond. 50°C) or in an Atlas Weather-O-Meter according to the conditions of SAE J1960.

(The evaluation of the test was made by measuring the % gloss retention (gloss after exposure compared to initial gloss). The results after exposure, according to the different light stabilizer compositions (the mentioned concentrations represent active substance relative to the solid content of the coating composition), are reported in tables 3-1, 3-2 and 3-3.

TABLE 3-1

| Gloss retention in percent after 1250 and 1500 hours exposure in UV-conB | | | |
|---|---|---|---|
| **Component (A) Hindered amine type** | **Component (B) UV absorber** | **(%) 20° gloss retention after 1250 hr.** | **(%) 20° gloss retention after 1500 hr.** |
| 1 % HALS 3 | 1% UVA 1 | 91 | 75 |
| 1% HALS 2 | 1% UVA 1 | 78 | 60 |
| 1% HALS 1 | 1% UVA 1 | 95 | 87 |
| 1% HALS 4 | 1% UVA 1 | 88 | 69 |

TABLE 3-2

| Gloss retention in percent after 2000 hours exposure in UV-conB | | |
|---|---|---|
| **Component (A) HALS** | **Component (B) UV absorber** | **(%) 20° gloss retention after 2000 hr.** |
| 1% HALS 4 | 1% UVA 2 | 88 |
| 1 % HALS 3 | 1% UVA 2 | 55 |
| 1% HALS 2 | 1% UVA 2 | 76 |
| 1% HALS 1 | 1% UVA 2 | 92 |

TABLE 3-3

| Gloss retention in percent after 2500 and 3000 hours per WOM SAE J1960 | | | |
|---|---|---|---|
| **Component (A) HALS** | **Component (B) UV absorber** | **(%) 20° gloss retention after 2500 hr.** | **(%) 20° gloss retention after 3000 hr.** |
| 1 % HALS 2 | 1% UVA 1 | 26 | 15 |
| 1% HALS 1 | 1% UVA 1 | 31 | 20 |
| 1% HALS 4 | 1% UVA 1 | 25 | 14 |

## EXAMPLE 4

The resin of the clear coat is a so-called 2-component polyurethane coating, available as Clear FF95-0104 and the hardener is available as SC29-0160. The ratio of the resin to the hardener is 77:23. The base coat was Glasurit® Metallic L54 blue metallic 060. Both the components of the clear coat and the base coat are obtainable from the company BASF.

The two layer coating system was applied onto aluminum panels with a 30 minutes curing at 140°C and submitted to artificial weathering in an Atlas UV-conB according to the conditions of ASTM G53-96 or NFT 30-036, with a 313 nm lamp and a cycle (8 hours light 70°C - 4 hours Cond. 50°C) or in an Atlas Weather-O-Meter according to the conditions of SAE J1960.

The evaluation of the test was made by measuring the gloss retention as mentioned above. The results after exposure, according to the different light stabilizer compositions (the mentioned concentrations represent active substance relative to the solid content of the coating composition) are reported on tables 4-1, 4-2, 4-3 and 4-4.

TABLE 4-1

| Gloss retention in percent after 1250 and 1500 hours exposure in UV-conB | | | |
|---|---|---|---|
| **Component (A) HALS** | **Component (B) UV absorber** | **(%) 20° gloss retention after 1250 hr.** | **(%) 20° gloss retention after 1500 hr.** |
| 0.75% HALS 6 | 0.75% UVA 3 | 78 | 2 |
| 0.75% HALS 3 | 0.75% UVA 3 | 86 | 13 |

TABLE 4-1 (continued)

| Gloss retention in percent after 1250 and 1500 hours exposure in UV-conB | | | |
|---|---|---|---|
| **Component (A) HALS** | **Component (B) UV absorber** | **(%) 20° gloss retention after 1250 hr.** | **(%) 20° gloss retention after 1500 hr.** |
| 0.75% HALS 4 | 0.75% UVA 3 | 89 | 89 |
| 0.75% HALS 2 | 0.75% UVA 3 | 90 | 90 |
| 0.75% HALS 1 | 0.75% UVA 3 | 93 | 92 |

TABLE 4-2

| Gloss retention in percent after 1500 hours exposure in UV-conB | | |
|---|---|---|
| **Component (A) HALS** | **Component (B) UV absorber** | **(%) 20° gloss retention after 1500 hr.** |
| 0.75% HALS 6 | 0.75% UVA 4 | 2 |
| 0.75% HALS 3 | 0.75% UVA 4 | 90 |
| 0.75% HALS 4 | 0.75% UVA 4 | 63 |
| 0.75% HALS 2 | 0.75% UVA 4 | 83 |
| 0.75% HALS 1 | 0.75% UVA 4 | 93 |

TABLE 4-3

| Gloss retention in percent after 1250 hours exposure in UV-conB | | |
|---|---|---|
| **Component (A) (HALS)** | **Component (B) UV absorber** | **(%) 20° gloss retention after 1250 hr.** |
| 0.75% HALS 6 | 0.75% UVA 5 | 67 |
| 0.75% HALS 3 | 0.75% UVA 5 | 93 |
| 0.75% HALS 4 | 0.75% UVA 5 | 94 |
| 0.75% HALS 1 | 0.75% UVA 5 | 96 |

TABLE 4-4

| Gloss retention in percent after 3500 hours exposure in WOM SAE J1960 | | |
|---|---|---|
| **Component (A) (HALS)** | **Component (B) UV absorber** | **(%) 20° gloss retention after 3500 hr.** |
| 0.75% HALS 6 | 0.75% UVA 5 | 77 |
| 0.75% HALS 3 | 0.75% UVA 5 | 87 |
| 0.75% HALS 4 | 0.75% UVA 5 | 90 |
| 0.75% HALS 2 | 0.75% UVA 5 | 89 |
| 0.75% HALS 1 | 0.75% UVA 5 | 95 |

**EXAMPLE 5**

The resin of the clear coat is a so-called 1-component thermosetting acrylic coating, available as Clear 92-130. The base coat was Glasurit® Metallic L54 blue metallic 060. Both the components of the clear coat and the base coat are obtainable from BASF.

The two layer coating system was applied onto aluminum panels with a 30 minutes curing at 140°C and submitted to artificial weathering in an Atlas UV-conB according to the conditions of ASTM G53-96 or NFT 30-036, with a 313 nm lamp and a cycle (8 hours light 70°C - 4 hours Cond. 50°C) or in an Atlas Weather-O-Meter according to the conditions of SAE J1960.

The evaluation of the test was made by measuring the gloss retention as above. The results after exposure, according to the different light stabilizer compositions (the mentioned concentrations represent active substance relative to the solid content of the coating composition), are reported on table 5-1, 5-2, and 5-3.

TABLE 5-1

| Gloss retention in percent after 1000 hours exposure in UV-conB | | |
|---|---|---|
| **Component (A) HALS** | **Component (B) UV absorber** | **(%) 20° gloss retention after 1000 hr.** |
| 0.75% HALS 6 | 0.75% UVA 3 | 79 + cracks |
| 0.75% HALS 3 | 0.75% UVA 3 | 88 + cracks |
| 0.75% HALS 4 | 0.75% UVA 3 | 97 |
| 0.75% HALS 2 | 0.75% UVA 3 | 91 |
| 0.75% HALS 1 | 0.75% UVA 3 | 99 |

TABLE 5-2

| Gloss retention in percent after 1000 hours exposure in UV-conB | | |
|---|---|---|
| **Component (A) HALS** | **Component (B) UV absorber** | **(%) 20° gloss retention after 1000 hr.** |
| 0.75% HALS 6 | 0.75% UVA 4 | 84 |
| 0.75% HALS 1 | 0.75% UVA 4 | 99 |

TABLE 5-3

| Gloss retention in percent after 2500 hours exposure in WOM SAE J1960 | | |
|---|---|---|
| **Component (A) HALS** | **Component (B) UV absorber** | **(%) 20° gloss retention after 2500 hr.** |
| 0.75% HALS 6 | 0.75% UVA 5 | 98 + cracks |
| 0.75% HALS 1 | 0.75% UVA 5 | 100 |

## EXAMPLE 6

The resin of the clear coat is a so-called 1-component thermosetting acrylic coating, available as Clear 92-131. The base coat was Glasurit® Metallic L54 silver 060. Both the components of the clear coat and the base coat are obtainable from BASF.

The two layer coating system was applied onto aluminum panels with a 30 minutes curing at 140°C and submitted to artificial weathering in an Atlas UV-conB according to the conditions of ASTM G53-96 or NFT 30-036, with a 313 nm lamp and a cycle (8 hours light 70°C - 4 hours Cond. 50°C). The evaluation of the test was made by measuring the gloss retention as above. The results after exposure, according to the different light stabilizer compositions (the mentioned concentrations represent active substance relative to the solid content of the coating composition), are reported in table 6-1.

TABLE 6-1

| Gloss retention in percent after 500 and 750 hours in UV-conB | | |
|---|---|---|
| **Component (A) HALS** | **(%) 20° gloss retention after 500 hr.** | **(%) 20° gloss retention after 750 hr.** |
| 1.5% HALS 1 | 97 | 73 |
| 1.5% HALS 8 | 80 | 58 |
| 1.5% HALS 5 | 88 | 70 |
| 1.5% HALS 7 | 83 | 59 |

## EXAMPLE 7

The resin of the clear coat is a so-called 2-component polyurethane coating, available as Clear FF95-0111 and the hardener is available as SC29-0317. The ratio of the resin to the hardener is 77:23. The base coat is available as Glasurit® Metallic L54 silver 060. Both the components of the clear coat and the base coat are obtainable from BASF.

The two layer coating system was applied onto aluminum panels with a 30 minutes curing a 140°C and submitted to artificial weathering in an Atlas Weather-O-Meter (WOM) according to the conditions SAE J1960. The evaluation of the test was made by measuring the gloss retention as above. The results after exposure, according to the different light stabilizer compositions (the mentioned concentrations represent active substance relative to the solic content of the coating composition), are reported in table 7-1.

TABLE 7-1

| Gloss retention in percent after 1000 hours in WOM | |
|---|---|
| **Component (A) HALS** | **(%) 20° gloss retention after 1000 hr.** |
| 1.5% HALS 1 | 97 |
| 1.5% HALS 8 | 73 |
| 1.5% HALS 5 | 88 |
| 1.5% HALS 7 | 94 |
| 1.5% HALS 2 | 95 |
| 1.5% HALS 3 | 97 |

Surprisingly, by comparing the results of cured coatings containing HALS 1 versus other oligomeric HALS, e.g. HALS 5, HALS 7, and HALS 8, HALS 1 is unexpectedly better. Also, surprisingly, HALS 1, according to the invention is better than those HALS which are lower in molecular weight and which are recommended in the state of the art. The improvement in the stabilization as measured by 20° gloss is surprisingly due to the presence of HALS 1.

### Claims

1. A curable, film forming polymer composition, comprising a curable film forming polymer, at least one UV stabilizer, and an oligomeric or polymeric hindered amine stabilizer which is the reaction product of

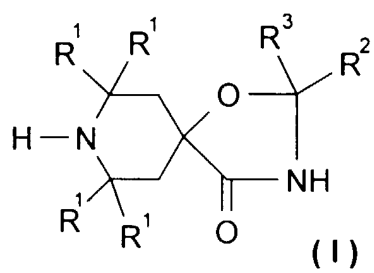

(I)

or its hydrochloride

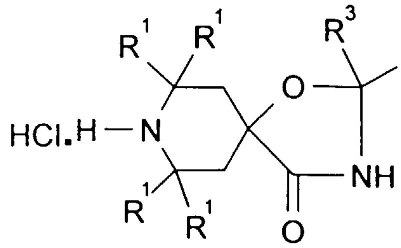

( II )

with epichlorohydrin

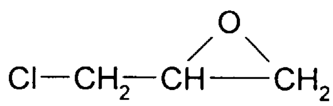

and having a molecular weight from 500 to 50,000;
wherein

| | |
|---|---|
| $R_1$ | is $C_5$-$C_7$-cydoalkyl, or a $C_1$-$C_{12}$-alkyl group, |
| $R^2$ and $R^3$ | independently of one another are a hydrogen atom or a $C_1$-$C_{18}$-alkyl, a $C_6$-$C_{18}$-aryl and $C_1$-$C_{18}$-alkyl substituted $C_6$-$C_{18}$-aryl group, or, together with the carbon atom connecting them, a 5- to 13-membered cycle. |

**2.** The coating composition of claim 1 wherein said hindered amine stabilizer has a molecular weight of 500 to 10,000, and

| | |
|---|---|
| $R^1$ | is a $C_6$-cycloalkyl, or a $C_1$-$C_4$-alkyl group; |
| $R^2$ and $R^3$ | independently of one another are a hydrogen atom or a $C_1$-$C_8$-alkyl group, or, together with the carbon atom connecting them, are a 6- to 12-membered ring. |

**3.** The coating composition of claim 1 wherein said hindered amine is the reaction product of 2,2,4,4-tetramethyl -21-oxo-7-oxa-3,20-diazadispiro [5.1.11.2] heneicosane or its hydrochloride with epichlorohydrin.

**4.** The coating composition of claim 1 wherein the UV absorber is selected from the group consisting of hydroxyphenyl benzotriazoles, hydroxyphenyl triazines, hydroxybenzophenones, aromatic succinic or malonic acid esters, phenylsalicylates, cyanophenylcinnamates, hindered benzoates, cyanophenylacrylates, cyanodiphenylacrylates, cyanocinnamamides, and oxalanilides.

**5.** The coating composition of claim 1 wherein the weight amount of said hindered amine is from 0.1 to 10% on total resin weight solids, and the weight ratio of said hindered amine to said UV absorber is from 1:2 to 3:1.

**6.** The coating composition of claim 1 wherein said film forming polymer is selected from alkyd, acrylic, urethane, epoxy, and polyester resins and modified versions thereof.

**7.** The coating of claim 1 in the form of a liquid and further comprising an organic solvent selected from hydrocarbons, ketones, ethers, acetates, aromatics, and alcohols.

**8.** The coating composition of claim 1 further comprising water.

**9.** The coating composition of claim 1 in the form of a solid powder.

**10.** A masterbatch comprising a polyester, an epoxy resin or a polyacrylate and at least two different stabilizers one of which is an oligomeric or polymeric hindered amine stabilizer as defined in claim 1.